# EUROPEAN PATENT SPECIFICATION

(11) **EP 1 720 638 B1**
(45) Date of publication and mention of the grant of the patent: **07.04.2010**
(21) Application number: 04806610.4
(22) Date of filing: 21.12.2004
(51) Int. Cl.: B01D 63/06, B01D 69/04, B01D 69/06, B01D 69/10

(54) **MODULE WITH NON-DEFORMABLE SUPPORT FOR FILTER SEPTA AND MEMBRANE TYPE FILTER ELEMENTS**
MODUL MIT NICHT VERFORMBAREM TRÄGER FÜR FILTERSEPTA UND MEMBRAN-FILTERELEMENTE
MODULE A SUPPORT NON DEFORMABLE POUR ELEMENTS DE FILTRE DU TYPE A CLOISON ET MEMBRANE

(30) Priority: 21.01.2004 IT MI20040070
(43) Date of publication of application: 15.11.2006
(73) Proprietor: Bassoli, Alessandro, 43051 Albareto (IT)
(72) Inventor: Vernocchi, Valerio, 47020 Cesena (IT); Bassoli, Alessandro, 43051 Albareto (Parma) (IT)
(74) Representative: Gotra, Stefano
(86) International application number: PCT/IB2004/052883
(87) International publication number: WO 2005/079962

(56) References cited:
- EP-A- 0 561 001
- EP-A- 1 040 860
- WO-A-00/29098
- WO-A1-90/04451
- DE-A1- 3 908 828
- GB-A- 1 313 795
- US-A- 4 071 937
- US-A- 5 454 947
- US-B1- 6 217 764
- PATENT ABSTRACTS OF JAPAN vol. 2002, no. 12, 12 December 2002 (2002-12-12) & JP 2002 239353 A (SUMITOMO ELECTRIC IND LTD), 27 August 2002 (2002-08-27)
- PATENT ABSTRACTS OF JAPAN vol. 2000, no. 19, 5 June 2001 (2001-06-05) & JP 2001 029761 A (ATHENE KK), 6 February 2001 (2001-02-06)

## Description

### TECHNICAL FIELD AND BACKGROUND ART

This invention refers to a module for filter septa and membrane type elements according to the introduction of the main claim.

Micro-filtering, ultra-filtering, nano-filtering and reverse osmosis technology is implemented with different types of modules, the most efficient and less cumbersome of which are those of the membrane type.

Micro-filtering is a process that uses a membrane able to remove all particles with the diameter of between 0.1 and 1 micron and above. More generally, this type of membrane removes particles in suspension and large colloidal species, while macro-molecules and saline species pass through untreated; the difference in pressure between the upstream and downstream points of the membrane (cross-membrane pressure) is typically between zero and 3-4 bar.

Ultra-filtering is a process based on the use of a membrane able to remove all the particles as in the previous case and also all organic substances within a molecular weight of between 1000 to approx. 100000.

Ultra-filtering does not trap ionic species and the cross-membrane pressure is generally between 1 and 7 bar.

Nano-filtering is a process based on the use of a membrane able to remove all particles in suspension, all organic substances with a molecular weight of more than 300 and ionic species, selectively the bivalent (such as for example calcium, magnesium and sulphates) at 75-85% and monovalent (sodium, nitrates, chlorides) at 55-65%.

The cross-membrane pressure ranges approximately from 3 to 16 bar.

Reverse osmosis which, strictly speaking, cannot be considered a real filtering technique, is a process that also uses a membrane able to remove all the particles in suspension, all organic substances with a molecular weight above 200 and all ionic species from 98 to 99.8%. The cross-membrane pressure is usually between 7 and 84 bar.

Below in this patent, to simplify description, the generic term "filtering" will be used to indicate micro-filtering, ultra-filtering, nano-filtering and reverse osmosis. The generic term "filter membrane" or simply "membrane" will indicate the filter septum used for micro-filtering, for ultra-filtering and for nano-filtering and also the membrane used for reverse osmosis.

The flow of fluid treated by a module is basically proportional to the surface of the filter membrane. Therefore, the aim of whoever designs a filter or reverse osmosis module is to maximise the surface of the membrane while reducing overall dimensions to a minimum.

It can be said that the flow of fluid that passes through the filter membrane is also proportional to the difference in pressure between the points upstream and downstream of the membrane (cross-membrane pressure) whereby, as the filter membranes have a limited mechanical resistance, particular measures are necessary to avoid breakage. Another primary objective for whoever designs a module is that of ensuring that the membrane can be washed easily and effectively for optimal regeneration of the module and to extend its service life. The modules for filter septa and membrane elements available today on the market are of four main types: tubular, flat wall, spiral-wound and hollow fibre. Of these, the module with the most favourable filter surface/volume ratio is the spiral-wound type in which, in order to obtain large filtering surfaces and reduced overall dimensions, a membrane, a screen of plastic material and a sheet of impermeable material are overlapped in this order and rolled in order to form a spiral. The plastic screen is designed to create a passage for the fluid to be treated.

The fluid to be treated enters from the base of the cylindrical pack that forms the spiral, flowing between the cavities produced by the presence of the screen, through the membrane and, once treated, is blocked by the impermeable sheet and forced to move tangentially so that it reaches the centre of the spiral where it is collected by the tube around which the spiral is wound.

In flat wall modules, the filter membrane, of circular crown shape, rests on a support of the same shape. The fluid to be treated usually impinges on the membrane and the treated fluid collected on the opposite side flows out of the module in a radial direction. In this case, the relationship between the filtering surface and the volume of the module is considerably less favourable compared with the spiral-wound version.

Tubular and hollow fibre modules are characterised by a multitude of tubes or hollow fibres inside which the fluid treated is collected while the fluid to be treated is on the outside.

One of the problems of spiral-wound modules is that the lengthwise movement of the fluid is considerably obstructed by the meshes of the plastic screen which is, however, necessary to create a cavity through which the fluid to be treated can flow. As a result, the part of the filter membrane closest to the inlet of the fluid to be treated works better and more than the most distant part.

A second problem of the spiral-wound modules, also common to all the other modules, is that washing is not very effective and almost impossible due to the large number of undercuts formed by the mesh of the screen. To restrict the need for washing to a minimum, another coarser filter system is provided ahead of the filter plant with a consequent considerable increase in costs.

### DISCLOSURE OF INVENTION.

Therefore, the aim of this invention is to construct a reduced-size module that makes it possible to manage high level flows of fluid, to use a large surface membrane and which, at the same time, permits easy, efficient washing of the membrane. This purpose is achieved by a module, the characteristics of which are highlighted in the claims.

### BRIEF DESCRIPTION OF DRAWINGS.

Understanding of the invention will be facilitated by the following detailed description, provided for example purposes only and not therefore restrictive, of three preferred embodiments illustrated in the attached drawings, in which:
- Figure 1 is a schematic view of the lengthwise cross-section of the module in its preferred embodiment,
- Figure 2 is a view of the base of one of the prismatic elements forming the non-deformable support in its preferred embodiment;
- Figure 3 is an enlargement of one end of two overlapped prismatic elements;
- Figure 4 is a prospect view of the non-deformable support in a second embodiment;
- Figure 5 is a prospect view of a non-deformable support, not according to the invention;
- Figure 6 shows a non-deformable support, not according to the invention.

### BEST MODE FOR CARRYING OUT THE INVENTION.

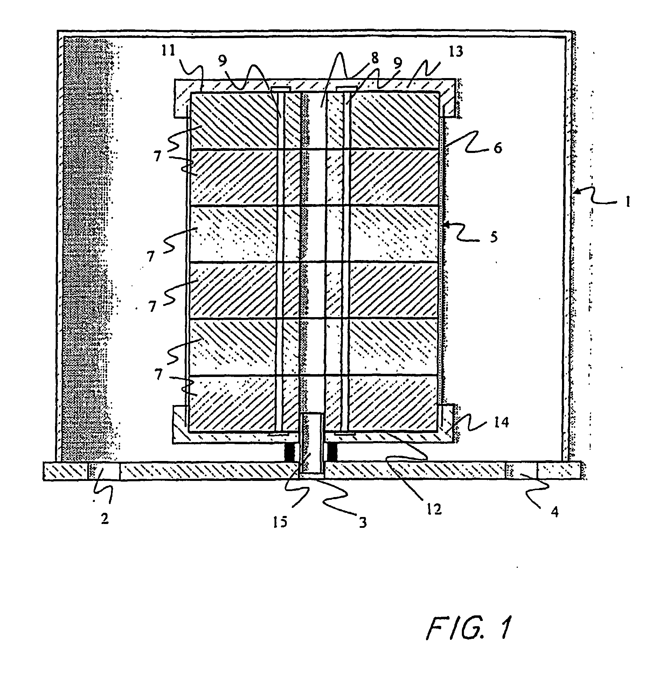

With reference to figure 1, the module according to this invention, in its preferred embodiment, includes a container 1 with at least an entrance hole 2 for the fluid to be treated and an outlet hole 3 for discharge of the fluid treated, a drainage hole 4, a non-deformable support 5 and a filter membrane 6 suitably rested on the side surface of the non-deformable support 5. The non-deformable support 5 includes two or more prismatic elements 7 all identical, stacked on each other, each with at least a lengthwise movement hole 8 for outflow of the fluid treated and at least another two or more lengthwise holes 9 for alignment. The prismatic elements of the stack may be tightened, for example, using bolts screwed onto guide rods with suitably threaded ends, that extend into such lengthwise alignment holes 9. Bases 11 and 12 of the non-deformable support 5 are sealed by two plugs 13 and 14 that prevent passage of the untreated fluid through the bases 11 and 12. At least one of the two plugs 13 and 14 has a hole to permit connection, via the tube 15, to the outlet hole 3 for discharge of the fluid treated.

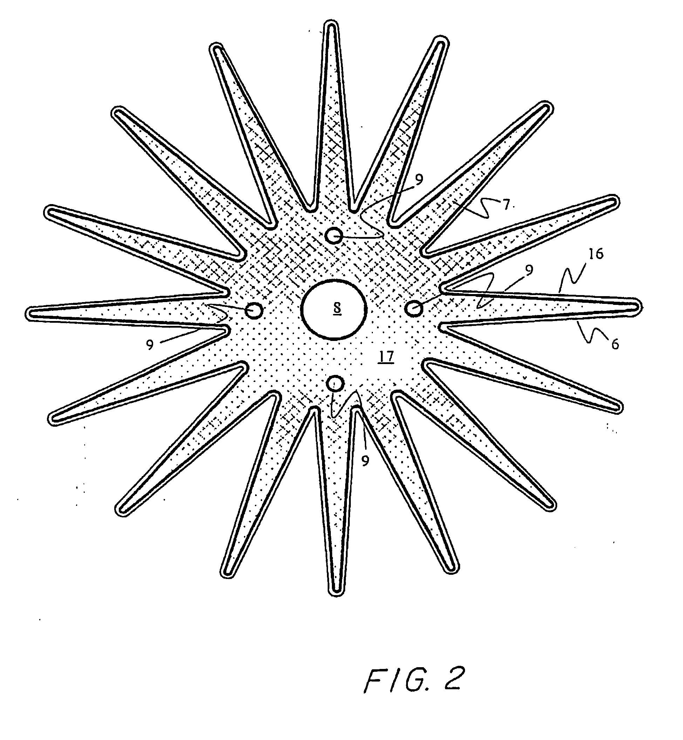

With reference to figure 2, the prismatic elements 7 that, stacked, form the non-deformable support 5, are of prismatic shape with a basically star-shaped base with rounded angles and cylindrical-shaped external side surface 16 on which the filter membrane 6, with high level roughness, regular or irregular, rests. The surface 17 of the upper and lower bases of each of these prismatic elements 7 is characterised by ducts or knurling that, from the side surface 16, lead to the centre of the support where the movement duct for outflow of the fluid treated is present, such duct consisting of the set of lengthwise holes 8 of such prismatic elements 7.

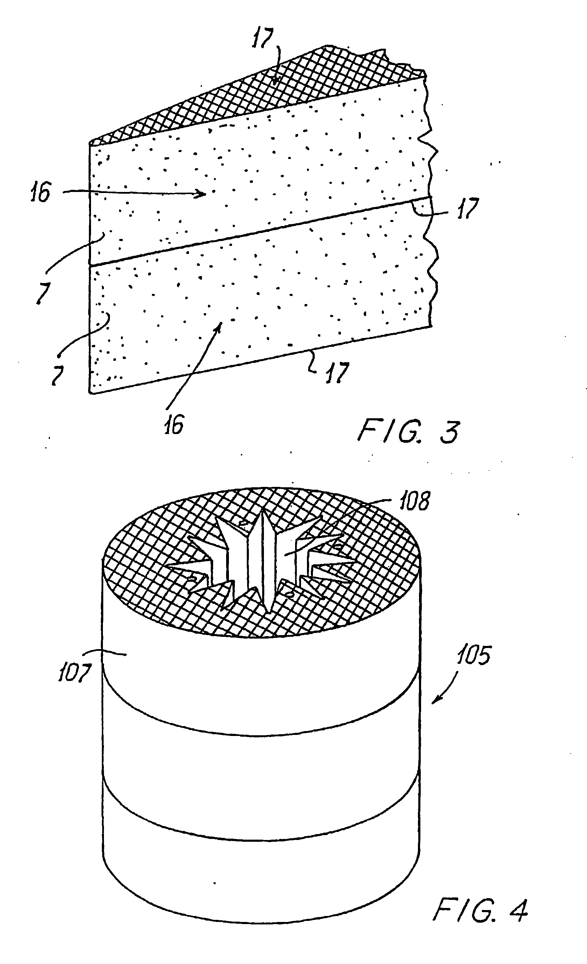

Figure 3 shows the detail of the end of two overlapped prismatic elements 7. The side surface 16 is rough while the surface 17 of the upper and lower bases is characterised by ducts or knurling that, preventing perfect contact between the bases of the two overlapped prismatic elements 7, allows the treated fluid to move towards the lengthwise movement hole 8 for outflow of the fluid treated.

Membrane 6, suitably fluted and with the two non-fluted terminal edges glued together to form a closed cylindrical surface, rested on the external rough side surface of the non-deformable support 5, is sealed in an airtight manner against the side surface of the non-deformable support 5 along its edges in the vicinity of the bases 11 and 12 of the non-deformable support 5. In operation, the rectangular-sheet-shaped membrane 6 is suitably fluted, the two opposite edges are glued to form a cylinder with the star-shaped base, it is inserted on the non-deformable support 5, bases 11 and 12 of which are immersed in a sealing material or a molten plastic material that wets the edge of the filter membrane. Practically speaking, a two-component sealant has been used that is available on the market with the name Polyprom 03 and Polycomp 40. Using this procedure, once the sealing material has solidified, it forms the two plugs 13 and 14 that guarantee correct seal of the membrane arid prevent infiltrations of untreated fluid via the lengthwise outlet duct through the upper and lower bases 11 and 12 of the non-deformable support 5.

Container 1 is intended to contain the fluid to be treated and to permit application of the necessary pressure on the fluid so as to force passing of this through the membrane 6.

The fluid to be treated fills the container 1, presses on the outer surface of the filter membrane 6 which therefore rests on the rough area of the side surface 16, passes through the membrane 6, flows between this and the very rough side surface 16 of the non-deformable support 5 until it reaches the contact surface between the base 17 of one prismatic element 7 and the next. The presence of ducts on the upper and lower surfaces of these prismatic elements 7 causes imperfect contact between these surfaces and therefore permits movement of the fluid along the ducts as far as the lengthwise movement hole 8 for outflow of the treated fluid connected with the outfeed hole 3. These ducts may be afforded by knurling of the surface or high-level roughness.

If high pressure on the fluid to be treated is not necessary in order to force passing of this through the membrane, the container 1 could also not be present, meaning that the module works at a vacuum. For example, the module, without the container 1, can be simply immersed in the fluid to be treated and the movement duct connected to a pump that, creating a vacuum, draws up the treated fluid.

The particular shape of the non-deformable support 5 permits easy, efficient washing of the surface of the filter membrane, for example through the mechanical action of a jet of water or detergent.

For this purpose, it is advantageous that the non-deformable support 5 may be rotated for example by a motor connected to this.

Preferably, the non-deformable support 5 must not have sharp edges on the side surface to avoid cutting or damage to the filter membrane that rests on this. Also, for the same reason, it is preferably made of plastic material such as for example ABS, polypropylene, polystyrene and similar materials. Very rough surfaces or surfaces with ducts or knurling, necessary for functioning of the non-deformable support 5, can be obtained advantageously through electro-erosion of the metal mould used to construct the component prismatic elements 7.

According to a particular aspect of the invention, a screen or wires for example made of plastic material, or a sheet of material permeable to the fluid, can be inserted between the non-deformable support 5 and the membrane 6 and also between the bases 17 of two contiguous prismatic elements 7, in order to create a space between the side surface 16 of the non-deformable support and the filter membrane 6 or between two contiguous prismatic elements within which the fluid treated may flow. In this case, both the side surface 16 and the surface of the bases 17 of the prismatic elements 7 may be smooth and therefore without roughness, ducts or knurling.

Figure 4 shows a second embodiment of the non-deformable support 105 of a module for filter septa and membrane elements. In this second embodiment, the non-deformable support 105 consists of prismatic elements 107 including a lengthwise movement hole 108 of the fluid with star-shaped or undulated cross-section. In this case, the filter membrane is placed inside the lengthwise movement hole 108 where the fluid to be treated arrives while the treated fluid is collected outside or by further lengthwise holes in the non-deformable support. The advantage of this second embodiment is that it does not require an external container for pressurisation of the fluid to be treated and it has a more compact, resistant external shape.

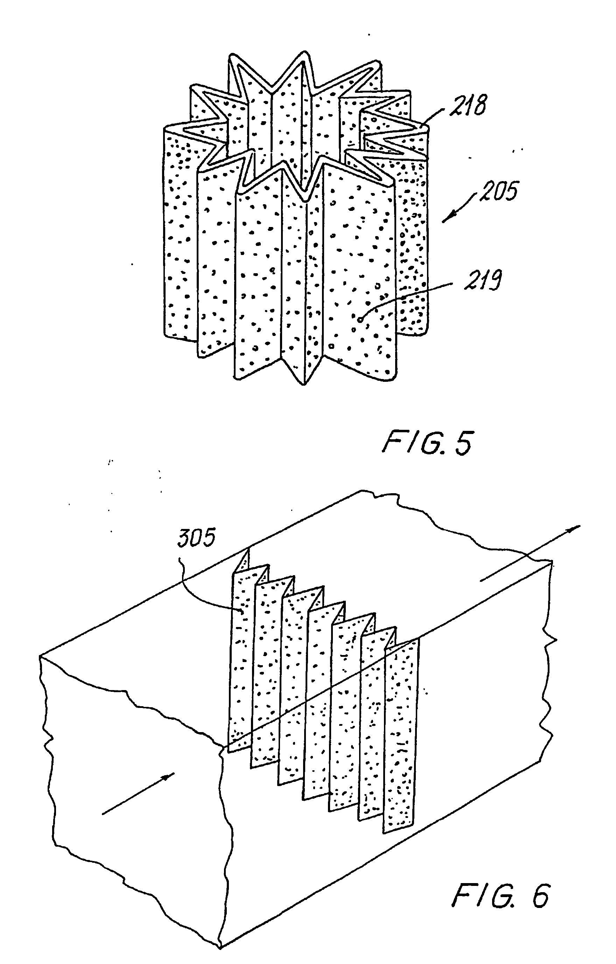

In contrast to the invention, Figures 5 and 6 show a non-deformable support, instead of including a set of overlapped and aligned prismatic elements that permit flowing of the treated fluid between the grooved surfaces of the bases in contact, the support thereof consists of a porous material or material permeable to the fluid, for example due to the presence of a multitude of small-diameter holes. Figure 5 illustrates the case in which this non-deformable support 205 consists of a metal sheet 218 of suitable thickness with a star-shaped straight section and equipped with a plurality of small-diameter holes 219 on the surface.

Figures 6 shows a non-deformable support 305 which may have an undulated cylindrical side surface with any cross-section, also not closed and not necessarily star-shaped or axial-symmetric. For example, this non-deformable support 305 could have the appearance of a non-deformable undulating septum that, inserted crosswise in a duct, filters the fluid flowing in this. The cylindrical surface with star-shaped straight section has the advantage of being easily washable by jets of liquid sprayed by fixed nozzles while the non-deformable support is rotated.

As the non-deformable support is of undulated shape, the filter surface is very high, volume is reduced, washing of the membrane is simple and efficient, making it possible therefore to eliminate or considerably reduce the need for expensive pre-filtering units upstream.

As any membrane can be placed on the non-deformable support, the module is readily adaptable for use for any type of filtering, also and especially the membranes used for micro-filtering, ultra-filtering, nano-filtering and reverse osmosis. Also, the module can, simply replacing the membrane, be used for different types of filtering or treatments or can be gradually equipped with membranes that are the state-of-the-art of sector technique.

The fact that the non-deformable support includes several prismatic elements means that the module can be adapted to use different height membranes. The module can be constructed so as to include a water jet washing system. In this case, the non-deformable support is advantageously connected to a motor that rotates it slowly for washing of the entire surface.

The term "basically undulating contour", as used here, also includes undulating contours characterised by dips and crests with more or less regular borders.

The term "cylindrical surface" or "cylindrical side surface", as used herein, means a surface formed by all parallel generating lines and any straight section, also open and therefore not forming a closed line.

## Claims

1. Module for treatment of fluids including a filter or reverse osmosis membrane (6) and a related support (5), wherein such support (5) is non-deformable and permeable to the fluid, said support being formed by a stack of at least two overlapped and aligned prismatic elements (7) all identical, stacked on each other; each prismatic element consisting of a non-porous material or of a material non-permeable to the fluid and with at least a lengthwise movement hole (8) for fluid and a basically in cross section undulated or star-shaped side surface (16) on which the said membrane rests, said support (5) permitting the fluid passing through the membrane (6) flowing from the outer surface (16) of the support (5) to the movement hole (8) between the surfaces of the bases of prismatic elements which are in contact with each other.

2. Module for treatment of fluids including a filter or reverse osmosis membrane (6) and a related support (105), wherein such support (105) is non-deformable and permeable to the fluid, said support being formed by a stack of at least two overlapped and aligned prismatic elements (107) all identical, stacked on each other, each prismatic element consisting of a non-porous material or of a material non-permeable to the fluid and with at least a lengthwise movement hole (108) of the fluid with a basically in cross section undulated or star-shaped side surface on which the said membrane rests, and an outer surface said support (5) permitting treated fluid flow from the movement hole surface to the outer surface between the surfaces of the bases of prismatic elements which are in contact with each other.

3. Module according to the claim 1 or 2, **characterised by** the fact that the side surface (16) of these prismatic elements (7, 107) is rough.

4. Module according to one or more of claims 1 to 3, **characterised by** the fact that these prismatic elements (7, 107) have lengthwise holes (9) intended to accommodate guide rods for alignment and possibly for thightening.

5. Module according to claim 1, **characterised by** the fact that the surface of the bases of such prismatic elements (7) are **characterised by** ducts or knurling or high level roughness, intended to convey the fluid treated towards the fluid movement duct.

6. Module according to one or more of claims from I to 5, **characterised by** the fact that a screen or wires or a sheet of permeable material is placed between the bases of the contiguous prismatic elements (7, 107).

7. Module according to one or more of claims from I to 6, **characterised by** the fact that a screen or wires or a sheet of permeable material is placed between the side surface (16) of the prismatic elements (7, 107) and the filter or reverse osmosis membrane (6).

8. Module according to one or more of claims from 1 to 7, **characterised by** the fact that the bases (17) of the prismatic elements (7, 107) are modeled with holes and opposite protuberances so that these elements, arranged one on the other, are well aligned.

9. Module according to claim 1, wherein a surface (17) of upper and lower bases of each prismatic element (7, 107) has ducts or knurling.

## Patentansprüche

1. Modul zur Behandlung von Flüssigkeiten mit einem Filter oder einer Umkehrosmosemembran (6) und einem damit verbundenen Träger (5), wobei ein solcher Träger (5) nicht verformbar und flüssigkeitsdurchlässig ist, wobei der Träger durch einen Stapel von mindestens zwei überlappten und ausgerichteten identischen Prismenelementen (7) ausgebildet ist, die aufeinander gestapelt sind, wobei jedes Prismenelement, das aus einem nicht-porösen Material oder einem nicht-flüssigkeitsdurchlässigen Material besteht, mindestens ein in Längsrichtung ausgebildetes Bewegungsloch (8) für Flüssigkeiten und eine im Wesentlichen im Querschnitt wellenförmige oder sternenförmige Seitenfläche (16) aufweist, an der die Membran anliegt, wobei der Träger (5) derart ausgebildet ist, dass die Flüssigkeit durch die Membran (6) von der Außenfläche (16) des Trägers (5) zum Bewegungsloch (8) zwischen den miteinander in Kontakt stehenden Oberflächen der Grundflächen der Prismenelemente fließen kann.

2. Modul zur Behandlung von Flüssigkeiten mit einem Filter oder einer Umkehrosmosemembran (6) und einem damit verbundenen Träger (105), wobei ein solcher Träger (105) nicht verformbar und flüssigkeitsdurchlässig ist, wobei der Träger durch einen Stapel von mindestens zwei überlappten und ausgerichteten identischen Prismenelementen (107) ausgebildet ist, die aufeinander gestapelt sind, wobei jedes Prismenelement, das aus einem nicht-porösen Material oder einem nicht-flüssigkeitsdurchlässigen Material besteht, mindestens ein in Längsrichtung ausgebildetes Bewegungsloch (108) für Flüssigkeiten mit einer im Wesentlichen im Querschnitt wellenförmigen oder sternenförmigen Seitenfläche aufweist, an der die Membran anliegt, und eine Außenfläche dieses Trägers (5), die derart ausgebildet ist, dass die behandelte Flüssigkeit von der Oberfläche des Bewegungslochs zur Außenfläche zwischen den miteinander in Kontakt stehenden Oberflächen der Grundflächen der Prismenelemente fließen kann.

3. Modul nach Anspruch 1 oder 2, **dadurch gekennzeichnet, dass** die Seitenfläche (16) dieser Prismenelemente (7, 107) rau ist.

4. Modul nach einem oder mehreren der Ansprüche 1 bis 3, **dadurch gekennzeichnet, dass** diese Prismenelemente (7, 107) in Längsrichtung ausgebildete Löcher (9) aufweisen, die für die Aufnahme von Führungsstangen zur Ausrichtung und gegebenenfalls zum Anziehen bestimmt sind.

5. Modul nach Anspruch 1, **dadurch gekennzeichnet, dass** die Oberfläche der Grundflächen solcher Prismenelemente (7) durch Kanäle oder Rändelung oder hohe Rauheit **gekennzeichnet** ist, zur Leitung der behandelten Flüssigkeit zum Kanal der Flüssigkeitsbewegung.

6. Modul nach einem oder mehreren der Ansprüche 1 bis 5, **dadurch gekennzeichnet, dass** ein Sieb oder Gitter oder eine dünne Schicht durchlässigen Materials zwischen den Grundflächen der aneinander liegenden Prismenelemente (7, 107) angeordnet ist.

7. Modul nach einem oder mehreren der Ansprüche 1 bis 6, **dadurch gekennzeichnet, dass** ein Sieb oder Gitter oder eine dünne Schicht durchlässigen Materials zwischen der Seitenfläche (16) der Prismenelemente (7, 107) und dem Filter oder der Umkehrosmosemembran (6) angeordnet ist.

8. Modul nach einem oder mehreren der Ansprüche 1 bis 7, **dadurch gekennzeichnet, dass** die Grundflächen (17) der Prismenelemente (7, 107) mit Löchern und gegenüberliegenden Ausstülpungen geformt sind, so dass diese Elemente, die aufeinander angeordnet sind, richtig ausgerichtet sind.

9. Modul nach Anspruch 1, wobei eine Oberfläche (17) von oberen und unteren Grundflächen jedes Prismenelements (7, 107) Kanäle oder Rändelung aufweist.

## Revendications

1. Module pour le traitement des fluides, comprenant un filtre ou une membrane à osmose inverse (6) et un support correspondant (5), dans lequel ledit support (5) est non-déformable et perméable au fluide, ledit support étant formé d'une pile d'au moins deux éléments prismatiques (7) se chevauchant et alignés, tous identiques, empilés les uns sur les autres, chaque élément prismatique formé d'un matériau non-poreux ou d'un matériau non-perméable au fluide et ayant au moins un trou de déplacement longitudinal (8) pour le fluide et une surface latérale substantiellement à section ondulée ou en forme d'étoile (16) sur laquelle ladite membrane s'appuie, ledit support (5) permettant le passage du fluide à travers la membrane (6) en s'écoulant de la surface externe (16) du support (5) vers le trou de déplacement (8) entre les surfaces des bases des éléments prismatiques qui sont en contact les uns avec les autres.

2. Module pour le traitement des fluides, comprenant un filtre ou une membrane à osmose inverse (6) et un support correspondant (105), dans lequel ce support (105) est non-déformable et perméable au fluide, ledit support étant formé d'une pile d'au moins deux éléments prismatiques (107) se chevauchant et alignés, tous identiques, empilés les uns sur les autres, chaque élément prismatique formé d'un matériau non-poreux ou d'un matériau non-perméable au fluide et ayant au moins un trou de déplacement longitudinal (108) pour le fluide, avec une surface latérale substantiellement à section ondulée ou en forme d'étoile sur laquelle ladite membrane s'appuie et une surface externe dudit support (5) permettant au fluide traité de s'écouler de la surface du trou de déplacement vers la surface externe entre les surfaces des bases des éléments prismatiques qui sont en contact les uns avec les autres.

3. Module selon la revendication 1 ou 2, **caractérisé par le fait que** la surface latérale (16) de ces éléments prismatiques (7, 107) est rugueuse.

4. Module selon une ou plusieurs des revendications de 1 à 3, **caractérisé par le fait que** ces éléments prismatiques (7, 107) présentent des trous longitudinaux (9) conçus pour recevoir des vis-guides pour l'alignement et éventuellement pour le serrage.

5. Module selon la revendication 1, **caractérisé par le fait que** la surface des bases de ces éléments prismatiques (7) est **caractérisée par** des conduits ou des stries ou par un niveau élevé de rugosité, conçus pour transporter le fluide traité vers le conduit de déplacement du fluide.

6. Module selon une ou plusieurs des revendications de 1 à 5, **caractérisé par le fait qu'**un écran ou des fils ou une feuille en un matériau perméable sont placés entre les bases des éléments prismatiques (7, 107) contigus.

7. Module selon une ou plusieurs des revendications de 1 à 6, **caractérisé par le fait qu'**un écran ou des fils ou une feuille en un matériau perméable sont placés entre la surface latérale (16) des éléments prismatiques (7, 107) et le filtre ou la membrane à osmose inverse (6).

8. Module selon une ou plusieurs des revendications de 1 à 7, **caractérisé par le fait que** les bases (17) des éléments prismatiques (7, 107) sont modelées avec des trous et des protubérances opposées, afin que ces éléments, arrangés l'un sur l'autre, soient bien alignés.

9. Module selon la revendication 1, dans lequel une surface (17) des bases supérieures et inférieures de chaque élément prismatique (7, 107) présente des conduits ou des stries.
